# EUROPEAN PATENT APPLICATION

(11) **EP 4 708 101 A1**
(43) Date of publication of application: **11.03.2026**
(21) Application number: 24800018.4
(22) Date of filing: 28.02.2024
(51) Int. Cl.: G06F 21/62, G06F 16/182, G09C 1/00

(54) **PROCESSING SYSTEM, PROCESSING METHOD, AND PROCESSING PROGRAM**

(30) Priority: 01.05.2023 JP 2023075851
(71) Applicant: NTT DOCOMO BUSINESS, Inc., Tokyo 100-8019 (JP)
(72) Inventor: TANAKA, Satoshi, Tokyo 100-8019 (JP); SAKURAI, Yoichi, Tokyo 100-8019 (JP); SAWADA, Masashi, Tokyo 100-8019 (JP); YAMAGIWA, Ryuta, Tokyo 105-6309 (JP)
(74) Representative: Hoffmann Eitle
(86) International application number: PCT/JP2024/007380
(87) International publication number: WO 2024/228287

(57) **Abstract**

A processing system (1) includes: a client (10) that uploads a file to be stored; and a secret sharing storage (30) that stores fragment files obtained by dividing the uploaded file in a distributed manner across a plurality of storage servers (30-1) to (30-3), in which the client (10) includes a backup unit (11) that compresses a plurality of files to be stored into one file at a predetermined compression rate and then uploads the compressed file, and the secret sharing storage (30) includes: the plurality of storage servers (30-1) to (30-3); and a distribution server (20) that encrypts the compressed file, and then divides the compressed file into fragment files and stores the fragment files in a distributed manner across the plurality of storage servers (30-1) to (30-3).

## Description

The present invention relates to a processing system, a processing method, and a processing program.

### [Background Art]

In the case of handling personal information and important information, secure data storage is required. Data concealment by encryption using shared key encryption and public key encryption is one of secure data storage methods, but there is a possibility that data is restored in the future in a case where a ciphertext is stolen from a server. Therefore, there has been proposed a technology called secret sharing in which even if one server is attacked, data cannot be restored from the stolen ciphertext alone.

### [Citation List]

### [Patent Citation]

Patent Literature 1: JP 2013-140310 A

### Non Patent Literature

Non Patent Literature 1: Dai Igarashi, Kota Tsuyuzaki, Yuto Kawahara, "SHSS: Super High-speed Secret Sharing Library for Object Storage Systems", Research Report, Security Psychology and Trust (SPT), 2015-SPT-14, vol 26, pp.1-8, [online], [Searched on February 22, 2023], Internet <URL:https://ipsj.ixsq.nii.ac.jp/ej/?action=pages_view_main &active_action=repository_view_main_item_detail&item_id=142 625&item_no=1&page_id=13&block_id=8>
Non Patent Literature 2: Adi Shamir, How to share a secret, Communications of the ACM, vol. 22, issue 11, pp.612--613, Nov., 1979, [online], [Searched on February 22, 2023], Internet <URL:https://dl.acm.org/doi/abs/10.1145/359168.359176>

### [Summary of Invention]

### [Technical Problem]

The secret sharing is a technology in which input data is fragmented into fragment files (for example, referred to as shares), and the fragment files are stored in a distributed manner across different servers to perform encryption. Each fragment file cannot be restored alone.

Here, in a secret sharing storage, in a case where a large amount of small-capacity files of about several KB are stored, the size of each fragment file is smaller than a sector size, and as a result, there is a problem that surplus of a sector arises for each file, thereby increasing disk usage.

The present invention has been made in view of the above, and an object of the present invention is to provide a processing system, a processing method, and a processing program that enable a reduction in a surplus region at the time of disk storage of each fragment file in a secret sharing storage.

### [Solution to Problem]

In order to solve the above-described problems and achieve the object, a processing system includes: a client that uploads a file to be stored; and a secret sharing storage that stores fragment files obtained by dividing the uploaded file in a distributed manner across a plurality of storage servers, wherein the client includes a backup unit that compresses a plurality of files to be stored into one file at a predetermined compression rate and then uploads the compressed file, and the secret sharing storage includes: the plurality of storage servers; and a distribution server that encrypts the compressed file, and then divides the compressed file into fragment files and stores the fragment files in a distributed manner across the plurality of storage servers.

### [Advantageous Effects of Invention]

According to the present invention, it is possible to reduce a surplus region at the time of disk storage of each fragment file in a secret sharing storage.

### [Brief Description of Drawings]

FIG. 1 is a block diagram illustrating an example of a configuration of a processing system according to an embodiment.
FIG. 2 is a diagram illustrating an outline of distributed storage in a general secret sharing storage.
FIG. 3 is a diagram for describing an outline of processing in the embodiment.
FIG. 4 is a diagram for describing an outline of processing according to a related art.
FIG. 5 is a sequence diagram illustrating a processing procedure of a processing method according to the embodiment.
FIG. 6 is a diagram illustrating a computer that executes a program.

### [Embodiments for Carrying Out the Invention] (DESCRIPTION OF EMBODIMENTS)

Hereinafter, embodiments of a processing system, a processing method, and a processing program according to the present application will be described in detail with reference to the drawings. Note that the processing system, the processing method, and the processing program according to the present application are not limited by the embodiments.

In the following embodiments, the processing system, the processing method, and a processing flow of the processing program according to the embodiments will be sequentially described, and finally, effects of the embodiments will be described.

### [Embodiment]

First, an embodiment will be described. In the embodiment, a case where file data (file) to be stored is stored in a plurality of servers will be described as an example.

In the embodiment, a facility side compresses a plurality of upload files into one file and then uploads the file to a secret sharing storage, so that a surplus region of the file is efficiently reduced. As a result, an efficient fragment file can be generated.

### [Configuration of Processing System]

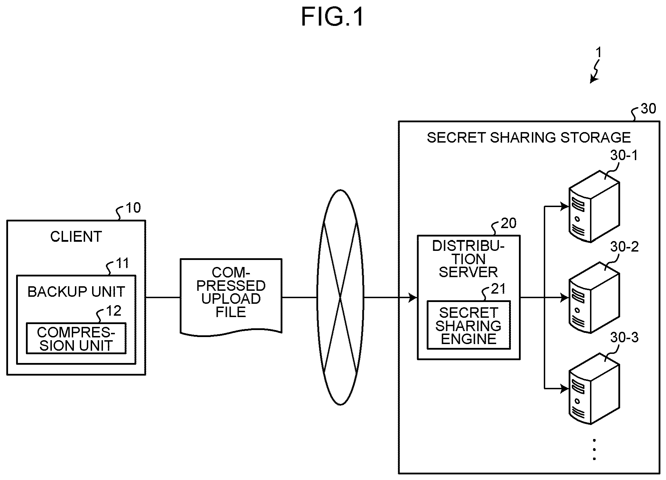

A configuration of a processing system according to the embodiment will be described. FIG. 1 is a block diagram illustrating an example of the configuration of the processing system according to the embodiment.

Hereinafter, an example in which a processing system 1 includes a client 10 that uploads a file and a secret sharing storage 30 as illustrated in FIG. 1 will be described. The configuration illustrated in FIG. 1 is merely an example, and a specific configuration and the number of devices are not particularly limited.

The client 10 acquires a file to be stored and uploads the acquired file to be stored to the secret sharing storage 30. For example, an operator of the client 10 selects the file to be uploaded through a web user interface (UI) screen for the processing system 1, which is deployed in a web browser, and uploads the file to the secret sharing storage 30.

The client 10 includes a backup unit 11 that performs upload processing for the file to be stored. The backup unit 11 includes a compression unit 12 that compresses a plurality of files into one file at a predetermined compression rate.

The backup unit 11 acquires the file to be stored. Then, in the backup unit 11, the compression unit 12 compresses a plurality of files to be stored into one file at a predetermined compression rate.

The compression unit 12 compresses a plurality of files into one file at a compression rate of 100% or less. For example, the compression unit 12 compresses a plurality of files into one file at a compression rate of 100%. That is, the compression unit 12 combines a plurality of files into one file. Alternatively, the compression unit 12 compresses a plurality of files into one file at a compression rate of 75%.

The backup unit 11 compresses a plurality of files to be stored into one file at a predetermined compression rate, and then uploads the compressed one file to the secret sharing storage 30.

The secret sharing storage 30 stores the uploaded file (one compressed file) in a distributed manner across a plurality of servers in a state in which the uploaded file is fragmented into fragment files. Each of the individual fragment files is meaningless data, and the original file cannot be restored with only one fragment file and information is not leaked. However, when a certain number or more of fragment files are obtained, the original file can be restored.

With the secret sharing storage 30, a processing system including the secret sharing storage 30 is constructed. In the secret sharing storage 30, one compressed file uploaded from the client 10 is stored in a state of fragment files in a distributed manner.

The secret sharing storage 30 encrypts file data and then stores the file data in a state of fragment files in a distributed manner across a plurality of storage servers 30-1 to 30-3 (secret sharing). The fragment files are stored in a distributed manner across the plurality of storage servers 30-1 to 30-3 in a state in which it is possible to identify from which facility the data has been uploaded.

The secret sharing storage 30 includes a distribution server 20 positioned upstream of the plurality of storage servers 30-1 to 30-3. The distribution server 20 includes a secret sharing engine 21 that controls the secret sharing.

The secret sharing engine 21 encrypts one compressed file uploaded by the client 10, and then divides the file into fragment files and stores the fragment files in a distributed manner across the plurality of storage servers 30-1 to 30-3.

### [Description of Outline of Distributed Storage]

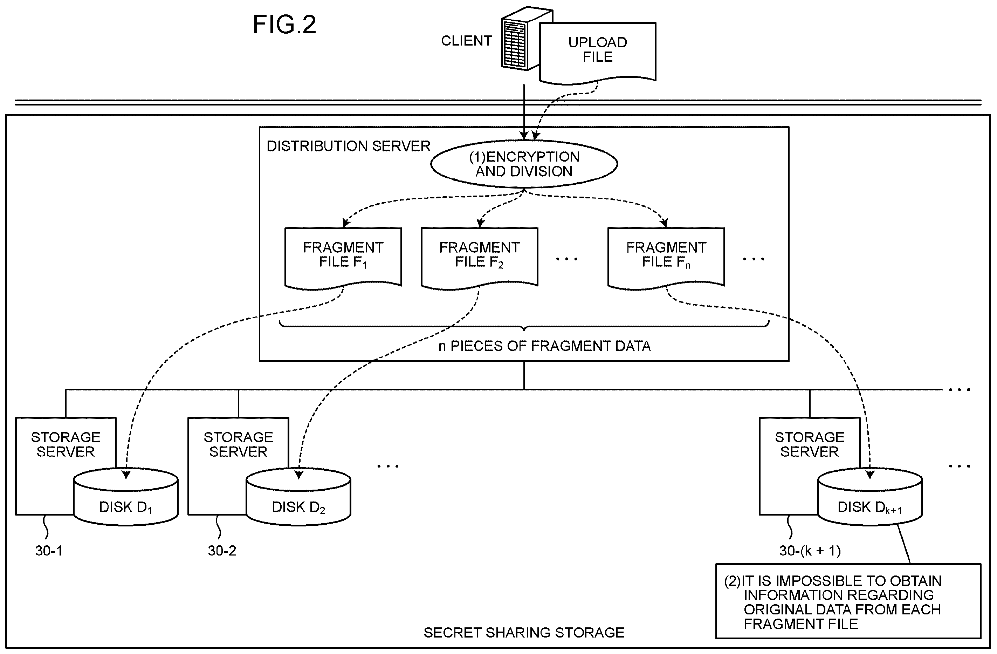

Next, an outline of distributed storage in a general secret sharing storage will be described with reference to FIG. 2. FIG. 2 is a diagram illustrating the outline of the distributed storage in the general secret sharing storage.

First, when an upload file is uploaded from a client to the secret sharing storage, a distribution server encrypts the upload file by secret sharing and divides the upload file into n fragment files ((1) in FIG. 2).

Then, the distribution server stores fragment files F₁, F₂, ···, and Fₙ in a distributed manner across disks D₁, ···, Dₖ₊₁, and the like of different storage servers 30-1, ···, 30-(k+1), and the like, respectively. It is impossible to obtain information regarding the original data from each fragment file alone ((2) in FIG. 2).

### [Outline of Processing of First Embodiment]

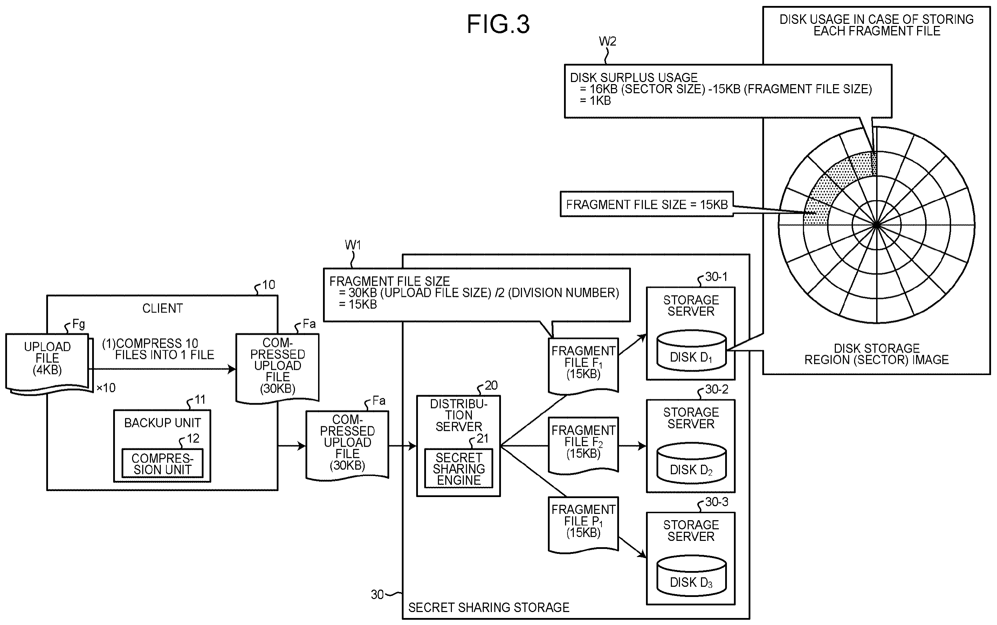

Next, an outline of processing in a first embodiment will be described. FIG. 3 is a diagram illustrating the outline of the processing in the embodiment.

In FIG. 3, a case where there are 10 files of 4 KB as upload files to be stored will be described as an example. A case where a computational method with the highest capacity efficiency is adopted and a minimum configuration (k,n) = (2,3) (k: the number of fragments required for restoration, and n: the total number of fragment files) is adopted will be described as an example. A case where the distribution server 20 divides one file into two fragment files and generates one (corresponding to m) parity file having the same size as the fragment files will be described as an example.

The client 10 acquires an upload file group Fg including 10 files each having a data amount of 4 KB as a storage target. Subsequently, the client 10 compresses the upload file group Fg into one file at a compression rate of 75% ((1) in FIG. 3). That is, the client 10 compresses the upload file group Fg into one upload file Fa of 30 KB. Then, the client 10 uploads the compressed upload file Fa to the secret sharing storage.

Subsequently, the distribution server 20 encrypts the upload file Fa, and then divides the upload file Fa into two fragment files F₁ and F₂ and generates one parity file (fragment file) P₁. Sizes of the fragment files F₁ and F₂ are 15 KB because the file of 30 KB (upload file size) is divided into two files (frame W1 in FIG. 3). The size of the parity file P₁ is 15 KB.

The distribution server 20 stores the fragment files F₁ and F₂ and the parity file P₁ in a distributed manner across the disks D₁ to D₃ of the different storage servers 30-1 to 30-3.

Here, a use amount of each of the disks D₁ to D₃ in the case of storing the fragment files F₁ and F₂ and the parity file P will be described. In a case where a size of a storage region (sector) of the disk D₁ is 4 KB, since the size of the fragment file F₁ is 15 KB, a storage region of 16 KB, which corresponds to four sectors, is used for storing the fragment file F₁.

A disk surplus usage is 1 KB (frame W2 in FIG. 3) obtained by subtracting 15 KB (the size of the fragment file F₁) from 16 KB (sector size), and an increase rate of a disk usage is limited to 1.1 times.

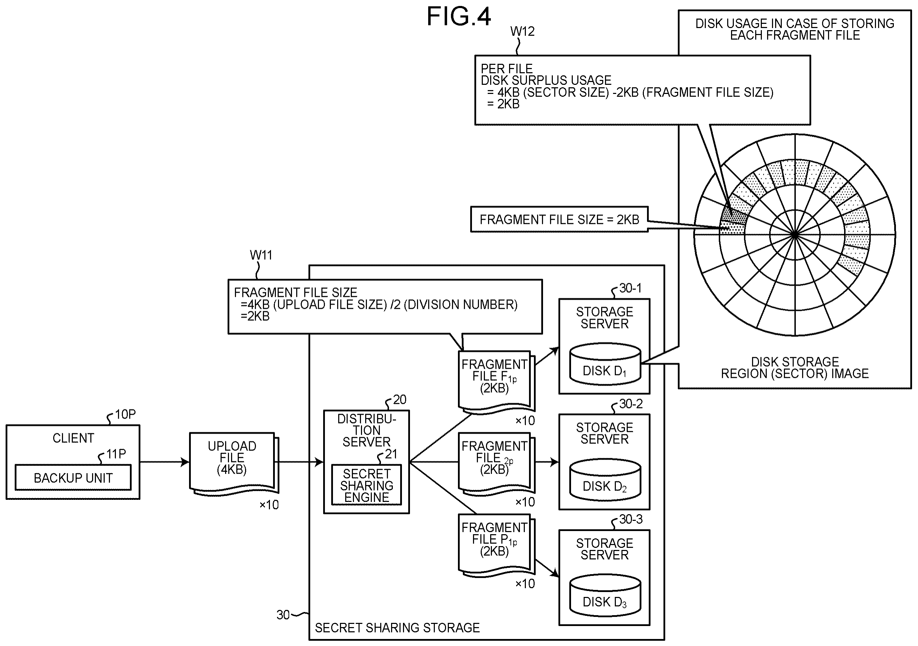

For comparison, a case where 10 upload files of 4 KB are uploaded will be described. FIG. 4 is a diagram illustrating an outline of processing according to a related art.

As illustrated in FIG. 4, 10 upload files of 4 KB are uploaded from a backup unit 11P of a client 10P to a secret sharing storage 30.

A distribution server 20 encrypts each of the upload files, divides each encrypted file into two fragment files F₁ₚ and F₂ₚ, and generates one parity file (fragment file) P₁ₚ. Sizes of the fragment files F₁ₚ and F₂ₚ are 2 KB because the file of 4 KB (upload file size) is divided into two files (frame W11 in FIG. 4). A size of the parity file P₁ₚ is also 2 KB.

Subsequently, the distribution server 20 stores the fragment files F₁ₚ and F₂ₚ and the parity file P₁ₚ in a distributed manner across disks D₁ to D₃ of different storage servers 30-1 to 30-3.

The distribution server 20 performs the above processing on 10 upload files. Therefore, 10 fragment files of 2 KB are stored in each of the disks D₁ to D₃ of the storage servers 30-1 to 30-3.

Taking the disk D₁ as an example, the fragment file F₁ₚ of 2 KB is stored in a sector of 4 KB. Therefore, a disk surplus usage per file is 2 KB (W12 in FIG. 4) obtained by subtracting 2 KB (the size of the fragment file F₁ₚ) from 4 KB (sector size).

Therefore, in the example of FIG. 4, a storage region corresponding to 2 KB per file becomes surplus, and a disk usage is increased by two times. In the example of FIG. 4, since there are 10 upload files, a storage region of 40 KB, which corresponds to 10 sectors, is used, and a surplus region is increased to 20 KB. As described above, as a result of the size of each fragment file being smaller than the sector size, surplus of a sector arises for each file, and the disk usage is increased.

On the other hand, in the present embodiment, the facility side compresses a plurality of upload files into one file and then uploads the file to the secret sharing storage, so that a surplus region of the file is efficiently reduced. As a result, in the present embodiment, an efficient fragment file can be generated. In the example of FIG. 3, the surplus region at the time of storage in the disks D₁ to D₃ of the storage servers 30-1 to 30-3 can be reduced to 1 KB. Therefore, in the present embodiment, the increase rate of the disk usage can be limited to 1.1 times, and efficiency can be improved by 1.8 times as compared with the case of storage without compression.

In addition, in FIG. 3, a case where the compression rate is 75% has been described as an example. However, even in a case where the compression rate is 100%, since the size of the fragment file can be increased and the fragment files can be stored in the disks D₁ to D₃ of the storage servers 30-1 to 30-3, it is obvious that the surplus region at the time of storage in the disks D₁ to D₃ of the storage servers 30-1 to 30-3 can be reduced as compared with the case of storage without compression.

### [Processing Procedure]

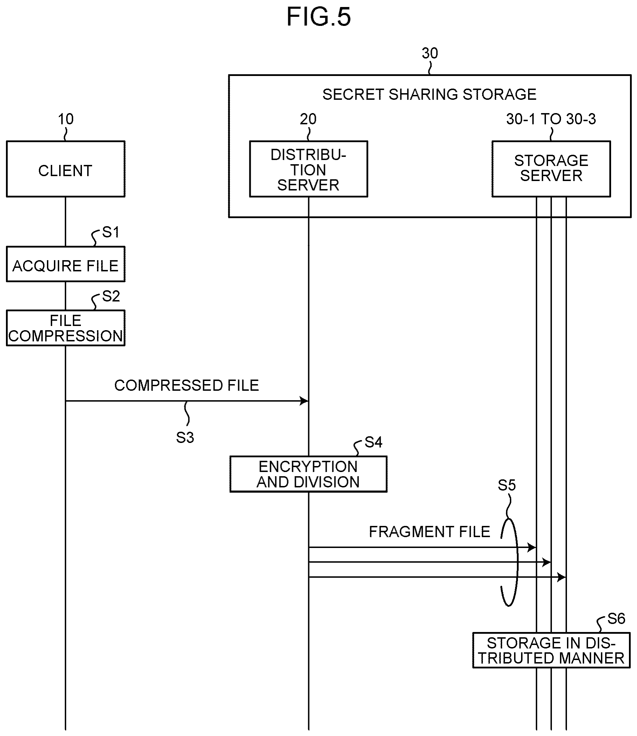

FIG. 5 is a sequence diagram illustrating a processing procedure of a processing method according to the embodiment. As illustrated in FIG. 5, the client 10 acquires upload files to be stored (step S1). Then, the client 10 compresses the plurality of upload files to be stored into one file at a predetermined compression rate (step S2), and uploads the compressed file to the secret sharing storage 30 (step S3).

In the secret sharing storage 30, the distribution server 20 encrypts the compressed file, divides the compressed file into fragment files (step S4), and stores the fragment files in a distributed manner across the plurality of storage servers 30-1 to 30-3 (steps S5 and S6).

### [Effects of Embodiment]

As described above, in the embodiment, the facility side compresses a plurality of upload files into one file and then uploads the file to the secret sharing storage, so that the surplus region of the file is efficiently reduced. As a result, in the embodiment, an efficient fragment file can be generated.

### [System Configuration, Etc.]

In addition, each illustrated component of each device is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like. Furthermore, arbitrary some or all of the processing functions executed in the devices can be implemented by a central processing unit (CPU), a graphics processing unit (GPU), and a program analyzed and executed by the CPU or the GPU, or can be implemented as hardware by wired logic.

Among the steps of processing described in the present embodiment, some or all of the steps of processing described as being performed automatically can be performed manually, or some or all of the steps of processing described as being performed manually can be performed automatically by a known method. In addition, the processing procedure, the control procedure, the specific name, and the information including various types of data and parameters illustrated in the document and the drawings can be arbitrarily changed unless otherwise specified.

### [Program]

In addition, it is also possible to create a program in which the steps of processing performed by the client 10, the storage servers 30-1 to 30-3, and servers 50-1 to 50-3 described in the above embodiment are described in a language executable by a computer. For example, it is also possible to create a program in which the steps of processing performed by the client 10, the storage servers 30-1 to 30-3, and the servers 50-1 to 50-3 in the embodiment are described in a language executable by a computer. In this case, when the computer executes the program, the same effects as those of the above embodiments can be obtained. Further, the program may be recorded in a computer-readable recording medium, and the program recorded in the recording medium may be read and executed by the computer to implement processing similar to those in the above-described embodiments.

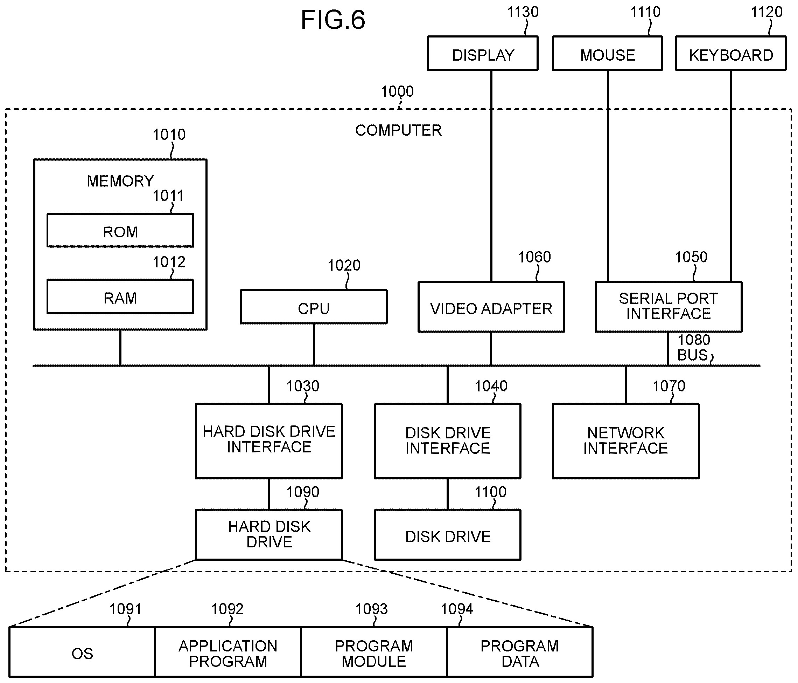

FIG. 6 is a diagram illustrating the computer that executes the program. As illustrated in FIG. 6, a computer 1000 includes, for example, a memory 1010, a CPU 1020, a hard disk drive interface 1030, a disk drive interface 1040, a serial port interface 1050, a video adapter 1060, and a network interface 1070, which are connected by a bus 1080.

As illustrated in FIG. 6, the memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090 as illustrated in FIG. 6. The disk drive interface 1040 is connected to a disk drive 1100. For example, a removable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

Here, as illustrated in FIG. 6, the hard disk drive 1090 stores, for example, an operating system (OS) 1091, an application program 1092, a program module 1093, and program data 1094. That is, the program described above is stored, for example, in the hard disk drive 1090 as the program module in which a command executed by the computer 1000 is described.

Further, various types of data described in the above embodiments are stored as the program data in, for example, the memory 1010 or the hard disk drive 1090. Then, the CPU 1020 reads the program module 1093 and the program data 1094 stored in the memory 1010 and the hard disk drive 1090 to the RAM 1012 as necessary, and performs various processing procedures.

The program module 1093 and the program data 1094 related to the program are not limited to being stored in the hard disk drive 1090, and may be stored in, for example, a removable storage medium and read by the CPU 1020 via a disk drive or the like. Alternatively, the program module 1093 and the program data 1094 related to the program may be stored in another computer connected via a network (local area network (LAN), wide area network (WAN), or the like) and read by the CPU 1020 via the network interface 1070.

The above-described embodiments and modifications thereof are included in the technology disclosed in the present application, and likewise fall within the scope of the invention described in the claims and equivalents thereof.

### [Explanation of Reference]

1 PROCESSING SYSTEM
10 CLIENT
11 BACKUP UNIT
12 COMPRESSION UNIT
30-1 to 30-3 STORAGE SERVER

## Claims

1. A processing system comprising:
a client that uploads a file to be stored; and
a secret sharing storage that stores fragment files obtained by dividing the uploaded file in a distributed manner across a plurality of storage servers, wherein
the client includes a backup unit that compresses a plurality of files to be stored into one file at a predetermined compression rate and then uploads the compressed file, and
the secret sharing storage includes:
the plurality of storage servers; and
a distribution server that encrypts the compressed file, and then divides the compressed file into fragment files and stores the fragment files in a distributed manner across the plurality of storage servers.

2. The processing system according to claim 1,
wherein the backup unit compresses the plurality of files to be stored into one file at a compression rate of 100% or less.

3. The processing system according to claim 1,
wherein the distribution server encrypts the compressed file, and then divides the compressed file into k fragment files, generates m parity files having the same size as the fragment files, and stores the fragment files and the parity files in disks of different storage servers in a distributed manner.

4. A processing method executed by a processing system including a client that uploads files to be stored, a distribution server that fragments each uploaded file, and a secret sharing storage including a plurality of storage servers that store fragment files in a distributed manner, the processing method comprising:
a process of compressing, by the client, the plurality of files to be stored into one file at a predetermined compression rate and then uploading the compressed file; and
a process of encrypting, by the distribution server, the compressed file, and then dividing the compressed file into the fragment files and storing the fragment files in a distributed manner across the plurality of storage servers.

5. A processing program for causing a computer to execute a method, wherein
the computer serving as a client is caused to perform a step of compressing a plurality of files to be stored into one file at a predetermined compression rate and then uploading the compressed file, and
the computer serving as a distribution server is caused to perform a step of encrypting the compressed file, and then dividing the compressed file into fragment files and storing the fragment files in a distributed manner across a plurality of storage servers.
